# EUROPEAN PATENT SPECIFICATION

(11) **EP 2 586 625 B1**
(45) Date of publication and mention of the grant of the patent: **01.07.2015**
(21) Application number: 12177072.1
(22) Date of filing: 19.07.2012
(51) Int. Cl.: B60B 1/04, B60B 27/00, B60B 27/02, B60B 5/02

(54) **Carbon fiber bicycle wheel**
Rad für Fahrrad aus Kohlenstofffaser
Roue de bicyclette en fibre de carbone

(43) Date of publication of application: 01.05.2013
(73) Proprietor: Gigantex Composite Technologies Co., Ltd., Beidou Township 52147 (TW)
(72) Inventor: Chen, Jyh-Hung, Beidou Town (TW)
(74) Representative: Viering, Jentschura & Partner Patent- und Rechtsanwälte

(56) References cited:
- EP-A1- 1 985 465
- EP-A1- 2 221 191
- DE-U1-202012 100 062
- FR-A1- 2 933 030
- US-A1- 2007 257 548

## Description

### Background of the Invention

### 1. Field of the Invention

The invention relates to a carbon fiber bicycle wheel according to the preamble of claim 1.

The present invention relates to a bicycle wheel and, in particular, to a carbon fiber bicycle wheel having a pair of half hubs made of carbon fiber and engaged with each other therein to provide the most structurally efficient.

### 2. Description of the Related Art

A bicycle wheel of the initially mentioned type is known, e.g., from US 2007/0257548 A1.

A typical bicycle wheel has a metal hub, wire tension spokes and a rim which holds a pneumatic rubber tire. The rim is commonly a metal extrusion that is butted into itself to form a hoop, though may also be a structure of carbon fiber composite. Some rims use both an aerodynamic carbon hoop bonded to an aluminum rim on which to mount conventional bicycle tires. The spokes do a couple of things, such as adding strength to the rim, transferring the rider's leg power from the hub to the wheel, and supporting the rider's weight on the wheel.

Furthermore, U.S. Patent No. 7,484,812 shows a bicycle wheel hub comprising a central tubular portion and a pair of side caps, whose diameter is larger than the central tubular portion. Each cap is provided with a set of holes, which are used to anchor the head portions of the respective spokes.

As another example, U.S. Patent No. 5,947,565 shows a hub assembly comprising a hub and including a proximate hub flange and an opposed hub flange. Each of the hub flanges and have spoke bores, which extend through the hub flanges and are oriented so that they are generally parallel to the axis of rotation of the hub. Spokes with heads at one end are laced through the spoke bores so that the heads seat in the spoke bores.

Generally, the prior art bicycle wheel suffers a problem in that the hub must be formed the holes used to anchor the respective spokes to reduce the structural strength of the joints between the hub and the spokes.

Furthermore the spokes are disengaged easily from the holes of the hub to cause uneven force and large bending moment that in turn affects the hub.

The present invention is, therefore, intended to obviate or at least alleviate the problems encountered in the prior art.

### Summary of the Invention

The invention provides a carbon fiber bicycle wheel according to claim 1.

According to the present invention, the main purpose is to provide a carbon fiber bicycle wheel includes a pair of half hubs and an axle assembly. Each of the half hubs is a hollow carbon fiber structure to form an axial hole extending along an axis of rotation thereof and includes a flange and an engaging portion disposed at two opposite ends thereof. Each of the flanges is provided with a plurality of spokes extending radially outward therefrom and connected with a rim. The engaging portions of the pair of half hubs are engaged with each other to cause the pair of half hubs formed a bicycle hub. The axle assembly is received in and engaged to the axial holes of the pair of half hubs and adapted to be attached to dropouts on a fork or a frame of a bicycle.

An advantage of the carbon fiber bicycle wheel according to the present invention is that the plurality of teeth of the pair of half hubs is engaged with each other to form a bicycle hub to provide the most structurally efficient.

Another advantage of the carbon fiber bicycle wheel according to the present invention is that each of the flanges is provided with a plurality of spokes extending radially outward therefrom and connected with the rim to prevent formed the holes used to anchor the respective spokes to remain the structural strength between the hub and the spokes, and the spokes can not be disengaged from the hub.

Other advantages and features of the present invention will become apparent from the following description referring to the drawings.

### Brief Description of the Drawings

Fig. 1 is a perspective view of a carbon fiber bicycle wheel in accordance with the present invention.
Fig. 2 is a partial, exploded perspective view of Fig. 1.
Fig. 3 is a cross-section view of Fig. 1.
Fig. 4 is a partial, enlarged view of Fig. 3.

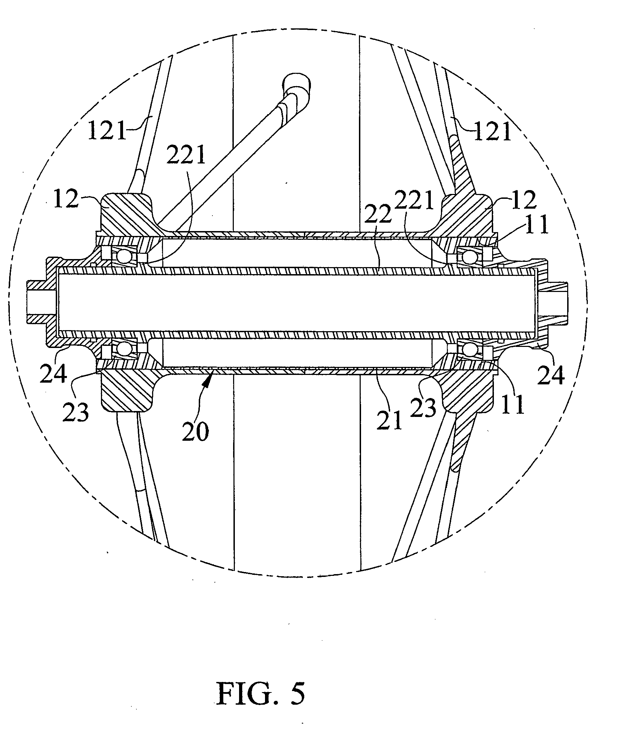

Fig. 5 is a cross-section view of Fig. 4.

### Detailed Description of the Preferred Embodiment

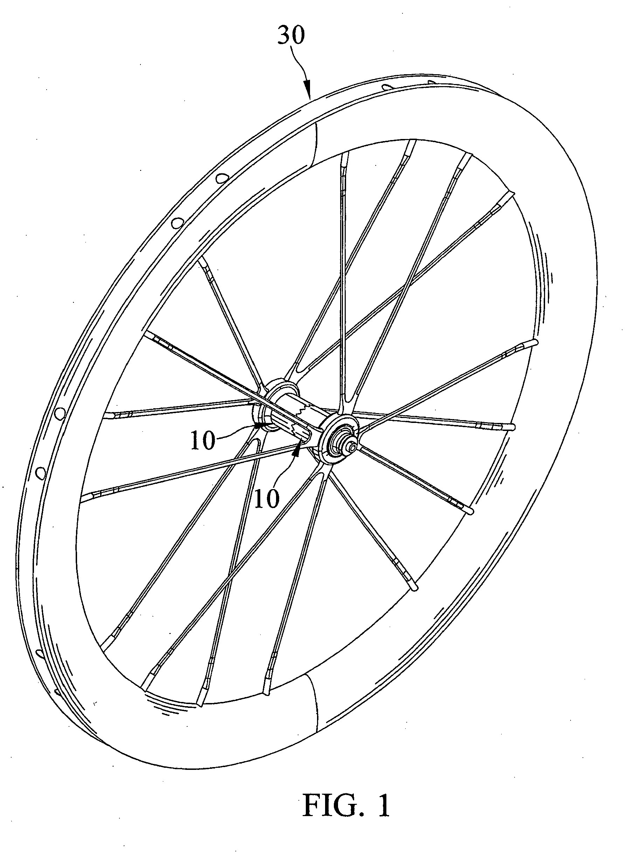

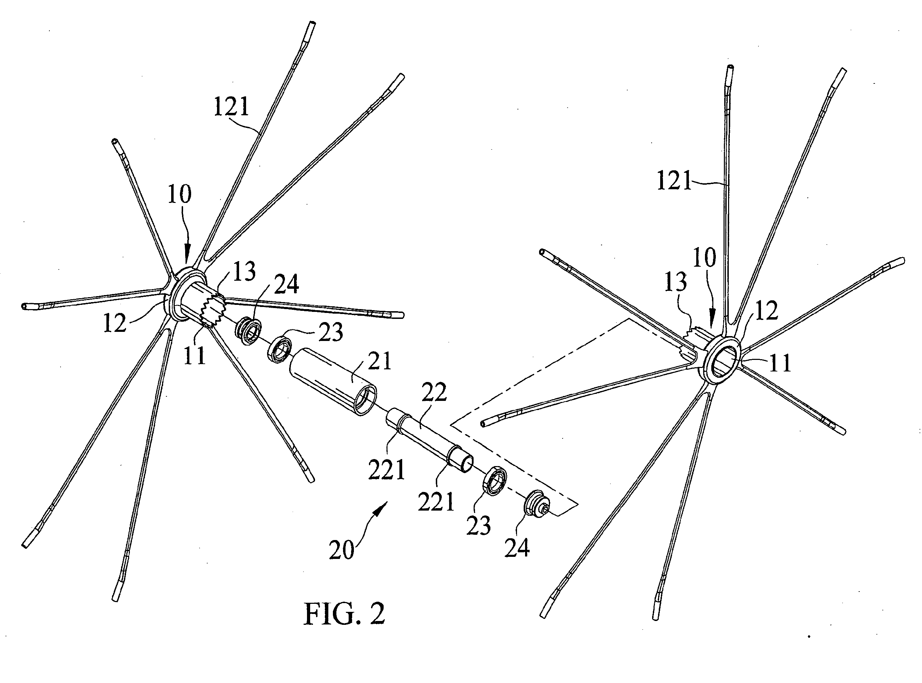

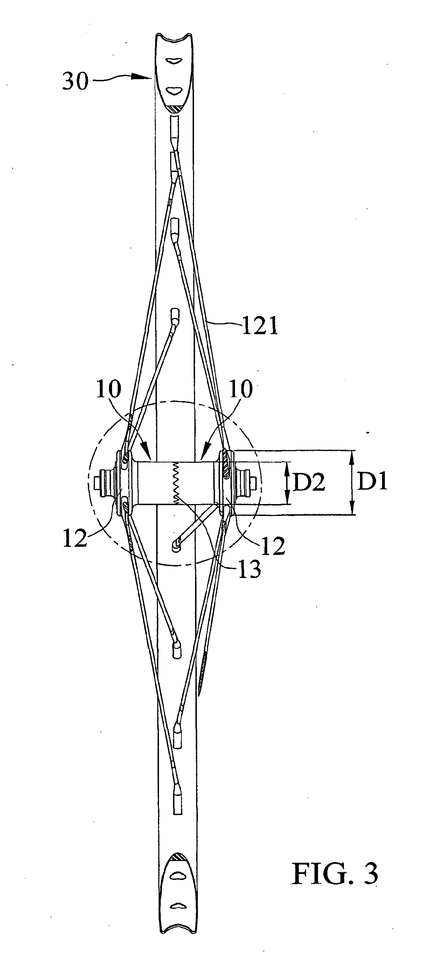

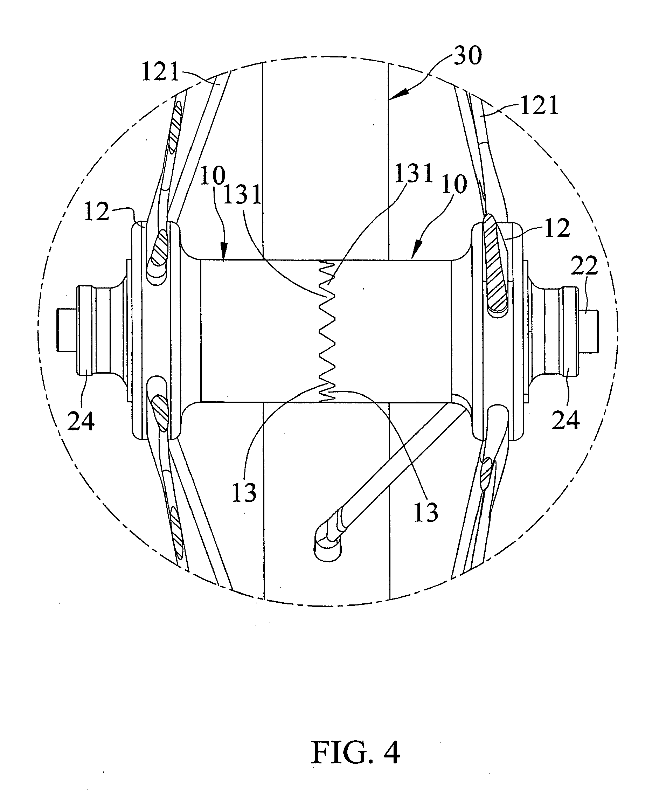

A carbon fiber bicycle wheel according to the preferred teachings of the present invention is shown in the drawings. In the preferred forms shown in Figs. 1 through 4, the carbon fiber bicycle wheel includes a pair of half hubs 10 engaged with each other and an axle assembly 20 received in and engaged to the pair of half hubs 10 and adapted to be attached to dropouts on a fork or a frame of a bicycle.

Each of the half hubs 10 is a hollow carbon fiber structure to form an axial hole 11 extending along an axis of rotation of the pair of half hubs 10. Each of the half hubs 10 includes a flange 12 and an engaging portion 13 disposed at two opposite ends thereof. The circumference of the flange 12 is larger than the circumference of the engaging portion 13, so that a first diameter D1 of the flange 12 is larger than a second diameter D2 of the engaging portion 13. Each of the flanges 12 is provided with a plurality of spokes 121 integrally extending radially outward therefrom and connected with a rim 30, so that the plurality of spokes 121 and each of the flanges 12 are formed a carbon fiber monocoque. The plurality of spokes 121 in each of the flanges 12 are grouped into pairs, more particular in this embodiment, the plurality of spokes 121 in each of the flanges 12 are grouped into four pairs. Each of the engaging portions 13 is provided with a plurality of teeth 131 at a distal end thereof. The plurality of teeth 131 of one of the engaging portions 13 are engaged with the plurality of teeth 131 of the other engaging portion 13 to cause the axial hole 11 of one of the half hubs 10 connecting and communicating the axial hole 11 of the other half hub 10 and extending along the axis of rotation of the pair of half hubs 10.

Furthermore, when the carbon fiber bicycle wheel is used in the front wheel of a bicycle, which does not need to support most of the rider's leg power from the pair of half hubs 10 to the rim 30, so that the plurality of teeth 131 of one of the engaging portions 13 only need being faced to and engaged with the plurality of teeth 131 of the other engaging portion 13 to form a bicycle hub.

Moreover, when the carbon fiber bicycle wheel is used in the rear wheel of a bicycle, which must transfer most of the rider's leg power from the pair of half hubs 10 to the rim 30, so that the plurality of teeth 131 of one of the engaging portions 13 not only need being faced to and engaged with but also require being glued with the plurality of teeth 131 of the other engaging portion 13 to form a bicycle hub.

The axle assembly 20 includes a housing 21, a central shaft 22, a pair of bearings 23, and a pair of side caps 24 therein. The housing 21 is a hollow metal structure and received in and engaged with the axial holes 11 of the pair of half hubs 10. The central shaft 22 is made of metals and received in the housing 21 and extended through the axis of rotation of the pair of half hubs 10. The central shaft 22 is provided with two raised and annular block portions 221 at two opposite ends thereof and adapted to resist and locate the pair of bearings 23 therein. The pair of side caps 24 is disposed at the two opposite ends of the housing 21 to prevent the pair of bearings 23 disengaged from the housing 21.

## Claims

1. A carbon fiber bicycle wheel comprising:
a pair of half hubs (10), wherein each of the half hubs (10) is a hollow carbon fiber structure to form an axial hole (11) extending along an axis of rotation thereof and includes a flange (12) and an engaging portion (13) disposed at two opposite ends thereof;
an axle assembly (20) received in and engaged to the axial holes (11) of the pair of half hubs (10) and adapted to be attached to dropouts on a fork or a frame of a bicycle; wherein the engaging portions (13) of the pair of half hubs (10) are engaged with each other to cause the pair of half hubs (10) formed a bicycle hub; **characterized in that**
each of the flanges (12) includes a plurality of spokes (121) integrally extending radially outward therefrom and connected with a rim (30).

2. The carbon fiber bicycle wheel as claimed in claim 1, wherein the circumference of the flange (12) is larger than the circumference of the engaging portion (13), wherein a first diameter (D1) of the flange (12) is larger than a second diameter (D2) of the engaging portion (13).

3. The carbon fiber bicycle wheel as claimed in claims 1 or 2, wherein each of the engaging portions (13) includes a plurality of teeth (131) at a distal end thereof, with the plurality of teeth (131) of one of the engaging portions (13) engaged with the plurality of teeth (131) of the other engaging portion (13) to cause the axial hole (11) of one of the half hubs (10) connecting and communicating the axial hole (11) of the other half hub (10) and extending along the axis of rotation of the pair of half hubs (10).

4. The carbon fiber bicycle wheel as claimed in claim 3, wherein the plurality of teeth (131) of one of the engaging portions (13) is glued with the plurality of teeth (131) of the other engaging portion (13).

5. The carbon fiber bicycle wheel as claimed in any one of the preceding claims, wherein the axle assembly (20) includes a housing (21), a central shaft (22) received in the housing (21) and extended through the axis of rotation of the pair of half hubs 10, a pair of bearings (23) engaged with the central shaft (22), and a pair of side caps (24) disposed at two opposite ends of the housing (21) to prevent the pair of bearings (23) disengaged from the housing (21) therein.

6. The carbon fiber bicycle wheel as claimed in claim 5, wherein the housing (21) and the central shaft (22) are made of metal.

7. The carbon fiber bicycle wheel as claimed in claims 5 or 6, wherein the central shaft (22) includes two raised and annular block portions (221) at two opposite ends thereof to resist and locate the pair of bearings (23).

## Patentansprüche

1. Kohlefaser-Fahrrad-Rad, aufweisend:
ein Paar Halbnaben (10), wobei jede der Halbnaben (10) eine hohle Kohlefaserstruktur ist, um eine axiale Öffnung (11) zu bilden, die sich entlang einer Drehachse davon erstreckt, und einen Flansch (12) und einen Eingriffsabschnitt (13) aufweist, die an zwei entgegengesetzten Enden davon angeordnet sind;
eine Achsenanordnung (20), die in den axialen Öffnungen (11) des Paares Halbnaben (10) aufgenommen ist und mit diesen im Eingriff steht, und die geeignet ist, an Ausfallenden von einer Gabel oder einem Rahmen eines Fahrrades angebracht zu werden;
wobei die Eingriffsabschnitte (13) des Paares Halbnaben (10) miteinander im Eingriff stehen, um zu bewirken, dass das Paar Halbnaben (10) eine Fahrradnabe bildet;
**dadurch gekennzeichnet, dass**
jeder der Flansche (12) eine Mehrzahl von Speichen (121) aufweist, die sich einstückig davon radial nach außen erstrecken und mit einer Felge (30) verbunden sind.

2. Kohlefaser-Fahrrad-Rad nach Anspruch 1, wobei der Umfang des Flansches (12) größer als der Umfang des Eingriffsabschnitts (13) ist, wobei ein erster Durchmesser (D1) des Flansches (12) größer als ein zweiter Durchmesser (D2) des Eingriffsabschnitts (13) ist.

3. Kohlefaser-Fahrrad-Rad nach Anspruch 1 oder 2, wobei jeder der Eingriffsabschnitte (13) an einem distalen Ende davon eine Mehrzahl von Zähnen (131) aufweist, wobei die Mehrzahl von Zähnen (131) des einen der Eingriffsabschnitte (13) mit der Mehrzahl von Zähnen (131) des anderen Eingriffsabschnitts (13) im Eingriff steht, um zu bewirken, dass die axiale Öffnung (11) der einen der Halbnaben (10) an die axiale Öffnung (11) der anderen Halbnabe (10) sich anschließt und mit dieser in Verbindung steht und sich entlang der Drehachse des Paares Halbnaben (10) erstreckt.

4. Kohlefaser-Fahrrad-Rad nach Anspruch 3, wobei die Mehrzahl von Zähnen (131) des einen der Eingriffsabschnitte (13) mit der Mehrzahl von Zähnen (131) des anderen Eingriffsabschnitts (13) verklebt ist.

5. Kohlefaser-Fahrrad-Rad nach einem der vorhergehenden Ansprüche, wobei die Achsenanordnung (20) ein Gehäuse (21), eine Mittelachse (22), die in dem Gehäuse (21) aufgenommen ist und sich durch die Drehachse des Paares Halbnaben (10) hindurch erstreckt, ein Paar Lager (23), das mit der Mittelachse (22) im Eingriff steht, und ein Paar Seitenkappen (24) aufweist, das an zwei entgegengesetzten Enden des Gehäuse (21) angeordnet ist, um zu verhindern, dass das Paar Lager (23) darin aus dem Gehäuse (21) gelöst wird.

6. Kohlefaser-Fahrrad-Rad nach Anspruch 5, wobei das Gehäuse (21) und die Mittelachse (22) aus Metall hergestellt sind.

7. Kohlefaser-Fahrrad-Rad nach Anspruch 5 oder 6, wobei die Mittelachse (22) an zwei entgegengesetzten Enden davon zwei erhöhte und ringförmige Blockabschnitte (221) aufweist, um das Paar Lager (23) gegenzuhalten und festzulegen.

## Revendications

1. Roue de bicyclette en fibre de carbone, comprenant :
une paire de demi-moyeux (10), dans laquelle chacun des demi-moyeux (10) est une structure en fibre de carbone creuse pour former un trou axial (11) s'étendant le long de son axe de rotation et comprend un rebord (12) et une partie de mise en prise (13) disposée au niveau de ses deux extrémités opposées ;
un ensemble d'essieu (20) reçu dans et mis en prise sur les trous axiaux (11) de la paire de demi-moyeux (10) et adapté pour être fixé aux pattes sur une fourche ou un cadre d'une bicyclette, dans laquelle les parties de mise en prise (13) de la paire de demi-moyeux (10) sont mises en prise entre elles pour amener la paire de demi-moyeux (10) à former un moyeu de bicyclette ;
**caractérisée en ce que** :
chacun des rebords (12) comprend une pluralité de rayons (121) s'étendant intégralement radialement vers l'extérieur à partir de ces derniers et raccordés avec une jante (30).

2. Roue de bicyclette en fibre de carbone selon la revendication 1, dans laquelle la circonférence du rebord (12) est supérieure à la circonférence de la partie de mise en prise (13), dans laquelle un premier diamètre (D1) du rebord (12) est plus grand qu'un second diamètre (D2) de la partie de mise en prise (13).

3. Roue de bicyclette en fibre de carbone selon les revendications 1 ou 2, dans laquelle chacune des parties de mise en prise (13) comprend une pluralité de dents (131) au niveau de son extrémité distale, avec la pluralité de dents (131) de l'une des parties de mise en prise (13) mise en prise avec la pluralité de dents (131) de l'autre partie de mise en prise (13) pour amener le trou axial (11) de l'un des demi-moyeux (10) à se raccorder avec et communiquer avec le trou axial (11) de l'autre demi-moyeu (10) et s'étendre le long de l'axe de rotation de la paire de demi-moyeux (10).

4. Roue de bicyclette en fibre de carbone selon la revendication 3, dans laquelle la pluralité de dents (131) de l'une des parties de mise en prise (13) est collée avec la pluralité de dents (131) de l'autre partie de mise en prise (13).

5. Roue de bicyclette en fibre de carbone selon l'une quelconque des revendications précédentes, dans laquelle l'ensemble d'essieu (20) comprend un boîtier (21), un arbre central (22) reçu dans le boîtier (21) et étendu à travers l'axe de rotation de la paire de demi-moyeux (10), une paire de paliers (23) mis en prise avec l'arbre central (22), et une paire de capuchons latéraux (24) disposés au niveau de deux extrémités opposées du boîtier (21) pour empêcher la paire de paliers (23) de se dégager du boîtier (21).

6. Roue de bicyclette en fibre de carbone selon la revendication 5, dans laquelle le boîtier (21) et l'arbre central (22) sont réalisés à partir de métal.

7. Roue de bicyclette en fibre de carbone selon les revendications 5 ou 6, dans laquelle l'arbre central (22) comprend deux parties de bloc relevées et annulaires (221) au niveau de ses deux extrémités opposées pour résister et positionner la paire de paliers (23).
